# EUROPÄISCHE PATENTSCHRIFT

(11) **EP 3 782 853 B1**
(45) Veröffentlichungstag und Bekanntmachung des Hinweises auf die Patenterteilung: **12.10.2022**
(21) Anmeldenummer: 20190834.0
(22) Anmeldetag: 13.08.2020
(51) Int. Cl.: B60N 3/10

(54) **ABLAGEVORRICHTUNG ZUR AUFNAHME VON LOSEN GEGENSTÄNDEN**
STORAGE DEVICE FOR HOLDING LOOSE OBJECTS
DISPOSITIF DE STOCKAGE PERMETTANT DE RECEVOIR DES OBJETS EN VRAC

(30) Priorität: 21.08.2019 DE 102019122445
(43) Veröffentlichungstag der Anmeldung: 24.02.2021
(73) Patentinhaber: DDS Digital Design Solutions GmbH, 50769 Köln (DE)
(72) Erfinder: Endert, Guido, 50769 Köln (DE); Lehmann, Stefan, 50769 Köln (DE); Wergen, Horst, 50769 Köln (DE); Christ, Alexander, 50769 Köln (DE)
(74) Vertreter: Bals & Vogel Patentanwälte PartGmbB

(56) Entgegenhaltungen:
- DE-A1- 19 963 202
- JP-A- 2005 096 614

## Beschreibung

Die Erfindung betrifft eine Ablagevorrichtung zur Aufnahme von losen Gegenständen gemäß dem Oberbegriff des Anspruchs 1, ein Verkehrsmittel mit wenigstens einer derartigen Ablagevorrichtung, sowie ein Verfahren zum Betreiben einer Ablagevorrichtung.

Aus dem Stand der Technik sind Ablagevorrichtungen, wie z.B. Getränkehalter für Verkehrsmittel, wie Fahrzeuge oder Flugzeuge bekannt. Dabei bieten derartige Ablagevorrichtungen einem Benutzer die Möglichkeit eine Flasche oder eine Dose auch in geöffnetem Zustand während der Fahrt oder des Fluges eines Verkehrsmittels abzustellen. Dazu sind die Getränkehalter in der Regel entweder dauerhaft zugänglich oder verstellbare. Dauerhaft zugängliche Getränkehalter haben den Nachteil, dass diese die Optik des Interieurs des Verkehrsmittels negativ beeinflussen können. Darüber hinaus beanspruchen dauerhaft zugängliche Getränkehalter Platz, der eine Beweglichkeit eines Benutzers einschränken kann. Ist ein Getränkehalter verstellbar ausgebildet, kann der Benutzer diesen einklappen, wenn er den Getränkehalter nicht benötigt, so dass der vom Getränkehalter benötigte Platz zur Bewegungsfreiheit des Benutzers freigegeben wird. Auch die Optik des Interieurs wird dadurch nicht mehr gestört. Die DE 19963202 zeigt eine Ablagevorrichtung zur Aufnahme zumindest eines losen Gegenstandes, insbesondere für ein Verkehrsmittel, aufweisendeine Aufnahmeeinheit, die zumindest in einen Ruhezustand (I) und einen Bereitschaftszustand (II) bringbar ist, wobei die Aufnahme des losen Gegenstands in einem Aufnahmebereich der Aufnahmeeinheit im Ruhezustand (I) verhindert ist und im Bereitschaftszustand (II) ermöglicht ist.

Bekannte verstellbare Getränkehalter haben jedoch den Nachteil, dass der Verstellmechanismus in der Regel viel Bauraum (auch im eingeklappten Zustand / Ruhezustand) benötigt, so dass eine Integration in schmale Bauteile, wie z.B. eine Armlehne eines Sitzes nicht möglich ist oder zu einer Verbreiterung der Armlehne führt. Weiterhin kann der Verstellmechanismus häufig nicht vollständig verborgen werden, so dass hier weitere optische Beeinträchtigungen des Interieurs die Folge sein können.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung einem Benutzer eine Ablage zu ermöglichen, bei welcher möglichst einfacher Bedienung und/oder verbesserter Bewegungsfreiheit des Benutzers, insbesondere im Ruhezustand, ein Bauraumbedarf reduziert ist.

Die voranstehende Aufgabe wird gelöst durch eine Ablagevorrichtung mit den Merkmalen des unabhängigen Anspruchs zur Ablagevorrichtung, ein Verkehrsmittel mit den Merkmalen des weiteren unabhängigen Anspruchs, sowie ein Verfahren mit den Merkmalen des unabhängigen Verfahrensanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Ablagevorrichtung beschrieben sind, selbstverständlich auch im Zusammenhang mit dem erfindungsgemäßen Verkehrsmittel und/oder dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Erfindungsgemäß ist eine Ablagevorrichtung zur Aufnahme zumindest eines losen Gegenstandes, insbesondere für ein Verkehrsmittel, vorgesehen. Die Ablagevorrichtung weist eine Aufnahmeeinheit auf, die zumindest in einen Ruhezustand und einen Bereitschaftszustand bringbar ist. Die Aufnahme (insbesondere Halterung) des losen Gegenstands in einem Aufnahmebereich der Aufnahmeeinheit ist im Ruhezustand verhindert und im Bereitschaftszustand ermöglicht. Ferner ist erfindungsgemäß vorgesehen, dass die Aufnahmeeinheit zumindest ein erstes und ein zweites (insbesondere seitliches) Öffnungselement aufweist, die beim Überführen der Aufnahmeeinheit vom Ruhezustand in den Bereitschaftszustand derart (seitlich) relativ zueinander bewegbar sind, dass der Aufnahmebereich, insbesondere in Bezug auf den Ruhezustand, vergrößert wird bzw. ist.

Unter dem losen Gegenstand kann ein mobiler Gegenstand verstanden werden, den ein Benutzer mit sich führen kann. Bspw. kann die Ablagevorrichtung zur Aufnahme eines Schlüsselbundes, einer Brille oder dergleichen ausgebildet sein. Vorzugsweise handelt es sich bei dem losen Gegenstand um einen Getränkebehälter, d.h. insbesondere einen Becher, eine Tasse, eine Getränkedose oder um eine Flasche. Der Aufnahmebereich kann (geometrisch) korrespondierend zum losen Gegenstand ausgebildet sein. Unter der Aufnahme eines losen Gegenstandes durch den Aufnahmebereich kann insbesondere verstanden werden, dass der lose Gegenstand im Aufnahmebereich abstellbar und/oder ablegbar und/oder gehalten ist. Vorzugsweise weist der Aufnahmebereich einen kreisförmigen Querschnitt auf, so dass ein Getränkebehälter in unterschiedlichen Richtungen einen sicheren Stand hat. Vorteilhafterweise kann der Aufnahmebereich derart ausgebildet sein, dass der Aufnahmebereich vertikal von oben (insbesondere im Bereitschaftszustand) zugänglich ist, wenn die Ablagevorrichtung montiert ist.

Um die Aufnahme des losen Gegenstandes im Ruhezustand zu verhindern kann der Aufnahmebereich im Ruhezustand z.B. verkleinert sein, so dass der lose Gegenstand, nicht im Aufnahmebereich ablegbar ist und/oder nicht in den Aufnahmebereich passt. Auch kann der Aufnahmebereich im Ruhezustand einem Benutzer verborgen und/oder unzugänglich (insbesondere in einem Gehäuseelement) sein. Im Bereitschaftszustand ist (hingegen) der Aufnahmebereich dem Benutzer insbesondere zugänglich.

Vorzugsweise ist der Aufnahmebereich im Bereitschaftszustand zumindest teilweise durch das erste und zweite Öffnungselement, insbesondere zylinderförmig, ausgebildet. Die Öffnungselemente können greiferartig und/oder zumindest teilweise überlappend ausgestaltet sein, so dass der lose Gegenstand zwischen den Öffnungselementen (insbesondere seitlich) einfassbar ist. Vorzugsweise kann jedes der Öffnungselemente einen teilkreisförmigen Ausschnitt aufweisen, so dass die Öffnungselemente gemeinsam einen kreisförmigen Aufnahmebereich ausbilden können. Dabei kann der jeweilige teilkreisförmigen Ausschnitt der Öffnungselemente mit einem (abstehenden) Haltelappen versehen sein, um den losen Gegenstand spielfrei zu halten. Die (seitliche) Relativbewegung der Öffnungselemente zueinander kann umfassen, dass beide Öffnungselemente bewegt werden oder dass lediglich eines der Öffnungselemente relativ zum anderen Öffnungselement bewegt wird. Um den Aufnahmebereich zu vergrößern, entfernen sich die Öffnungselemente dabei vorzugsweise voneinander. Es ist denkbar, dass die Öffnungselemente zueinander verschwenkbar sind oder linear zueinander verstellbar sind. Insbesondere können die Öffnungselemente aneinander geführt sein, um die relative (seitliche) Bewegung zu ermöglichen.

Durch die (insbesondere seitliche) relative Bewegbarkeit der Öffnungselemente zueinander, kann der Aufnahmebereich im Ruhezustand verkleinert sein. Dadurch ist insbesondere im Ruhezustand eine kompakte Ablagevorrichtung ermöglicht, ohne die Funktion im Bereitschaftszustand einzuschränken. Somit kann im Bereitschaftszustand eine sichere Aufnahme eines losen Gegenstandes ermöglicht sein, während zumindest die Aufnahmeeinheit im Ruhezustand einen geringen Platzbedarf aufweist. Dadurch kann die Ablagevorrichtung vorteilhafterweise in ein Ausstattungselement eines Verkehrsmittels integrierbar sein. So ist bspw. in Wohnwagen, Zügen oder Flugzeugen ein Platz im Bereich der Passagiere besonders wertvoll. In derartigen Verkehrsmitteln kann die Ablagevorrichtung aufgrund ihrer Kompaktheit bspw. in eine Armlehne oder Sitzteil integrierbar sein, die aufgrund des geringen Platzangebotes schmal ausgestaltet ist.

Ferner kann bei einer erfindungsgemäßen Ablagevorrichtung vorteilhafterweise vorgesehen sein, dass die Ablagevorrichtung ein Gehäuseelement aufweist und die Aufnahmeeinheit im Ruhezustand zumindest teilweise oder vollständig innerhalb des Gehäuseelementes angeordnet ist, insbesondere wobei sich der Aufnahmebereich im Ruhezustand vollständig innerhalb des Gehäuseelementes befindet. Das Gehäuseelement kann z.B. in ein Ausstattungselement des Verkehrsmittels integrierbar sein. Durch die Anordnung der Aufnahmeeinheit im Ruhezustand innerhalb des Gehäuseelementes, kann die Aufnahmeeinheit im Ruhezustand im Gehäuseelement verstaut sein, so dass ein Raum außerhalb des Gehäuses frei von der Aufnahmeeinheit sein kann. Vorteilhafterweise kann die Aufnahmeeinheit im Ruhezustand mit dem Gehäuseelement bündig abschließen oder nur geringfügig aus dem Gehäuseelement hervorragen. Dadurch kann eine Optik der Ablagevorrichtung und/oder eines Innenraums des Verkehrsmittels im Ruhezustand verbessert sein. Das Gehäuseelement kann eine Gehäuseöffnung aufweisen, in welche die Aufnahmeeinheit einschiebbar sein kann. Vorzugsweise kann die Aufnahmeeinheit auch im Bereitschaftszustand zumindest teilweise im Gehäuseelement angeordnet und/oder gelagert sein. Die Gehäuseöffnung kann durch eine gesonderte Klappe im Ruhezustand der Aufnahmeeinheit verschließbar sein oder durch die Vorderseite der Aufnahmeeinheit selbst, die zumindest teilweise oder vollständig aus der Vorderseite vom ersten und zweiten Öffnungselement besteht.

Weiterhin kann bei einer erfindungsgemäßen Ablagevorrichtung vorteilhafterweise vorgesehen sein, dass die Aufnahmeeinheit zwischen dem ersten und zweiten Öffnungselement ein Bodenelement aufweist, auf welchem der lose Gegenstand abstellbar ist, insbesondere wobei zumindest eines der Öffnungselemente relativ zum Bodenelement bewegbar ist. Durch das Bodenelement kann eine Abstellfläche des Aufnahmebereiches, insbesondere zur Aufnahme des losen Gegenstands in vertikaler Richtung, gebildet sein. Zur Vergrößerung des Aufnahmebereiches beim Überführen der Aufnahmeeinheit vom Ruhezustand in den Bereitschaftszustand kann das Bodenelement vorteilhafterweise relativ zu beiden Öffnungselementen (insbesondere absenkbar) bewegbar sein. Somit kann der Aufnahmebereich beim Überführen der Aufnahmeeinheit vom Ruhezustand in den Bereitschaftszustand in drei Richtungen (seitlich bzw. horizontal links und rechts sowie vertikal bzw. nach unten) vergrößerbar sein. Gleichzeitig kann der Aufnahmebereich dadurch beim Überführen der Aufnahmeeinheit vom in Bereitschaftszustand den Ruhezustand in drei Richtungen (seitlich bzw. horizontal rechts und links sowie vertikal bzw. nach oben / insbesondere hochfahrbar) verkleinerbar sein. Dadurch kann eine kompakte Ausbildung der Ablagevorrichtung im Ruhezustand weiter verbessert sein. Vorteilhafterweise kann das Bodenelement Wandbereiche aufweisen, um den losen Gegenstand bei Aufnahme des losen Gegenstands im Aufnahmebereich zu stabilisieren. Dadurch kann ferner eine vereinfachte Ausbildung der Öffnungselemente in diesem Bereich ermöglicht sein, ohne eine Stabilisierung des losen Gegenstandes zu verschlechtern.

Weiterhin kann bei einer erfindungsgemäßen Ablagevorrichtung vorteilhafterweise vorgesehen sein, dass die Aufnahmeeinheit ein Führungselement zur, insbesondere mittigen, Führung des Bodenelementes (zum Absenken und Anheben) zwischen dem ersten und zweiten Öffnungselement aufweist. Das Führungselement kann z.B. im Gehäuseelement anordbar sein und/oder am Gehäuseeelement führbar sein. Insbesondere kann das Bodenelement durch das Führungselement im und/oder am Gehäuseelement (höhenveränderbar) lagerbar sein. Dazu kann das Führungselement am Gehäuseelement abgestützt sein. Insbesondere kann das Gehäuseelement einen Gehäusetunnel aufweisen, in welchem das Führungselement führbar ist, um die Führung des Bodenelementes zu ermöglichen. Durch eine mittige Führung kann gewährleistet sein, dass das Bodenelement beim Überführen der Aufnahmeeinheit vom Ruhezustand in den Bereitschaftszustand unabhängig einer Bewegung der Öffnungselemente zentral am Aufnahmebereich angeordnet bleibt, insbesondere so dass eine zentrale Ablagefläche für den losen Gegenstand ermöglicht ist.

Weiterhin kann bei einer erfindungsgemäßen Ablagevorrichtung vorteilhafterweise vorgesehen sein, dass das Bodenelement zum Überführen der Aufnahmeeinheit vom Ruhezustand in den Bereitschaftszustand, insbesondere in vertikaler Richtung, absenkbar ist, insbesondere wobei das Führungselement ein Führungsmittel aufweist, in welchem das Bodenelement beweglich gelagert ist. Das Bodenelement kann ein Gegenführungsmittel aufweisen, welches mit dem Führungsmittel wirkt. So ist es denkbar, dass das Führungsmittel schienen- und/oder kulissenartig ausgebildet ist. Das Gegenführungsmittel kann als Zapfen und/oder Vorsprung korrespondierend zum Führungsmittel ausgebildet sein. Vorzugsweise ist das Bodenelement durch das Führungsmittel in einer Ebene führbar. Dadurch kann in einfacher Art und Weise eine sichere Führung des Bodenelementes ermöglicht sein. Entlang der durch das Führungsmittel vorgegebenen Richtung kann der Aufnahmebereich durch das Bodenelement vergrößerbar und/oder verkleinerbar sein, so dass eine einfache Bedienung und kompakte Bauweise der Ablagevorrichtung dadurch verbessert sein kann. Durch die Absenkbarkeit des Bodenelementes beim Überführen der Aufnahmeeinheit vom Ruhezustand in den Bereitschaftszustand kann ferner eine Kompaktheit der Ablagevorrichtung im Ruhezustand weiter verbessert sein. Insbesondere kann das Bodenelement beim Überführen der Aufnahmeeinheit vom Bereitschaftszustand in den Ruhezustand anhebbar und der Aufnahmebereich verkleinerbar sein.

Ferner kann bei einer erfindungsgemäßen Ablagevorrichtung vorteilhafterweise vorgesehen sein, dass zumindest eines der Öffnungselemente eine Auflagefläche aufweist, auf welcher ein Auflagemittel des Bodenelementes im Bereitschaftszustand auflegbar ist. Dadurch kann eine Relativbewegung des Bodenelementes zum dem Öffnungselement beim Überführen der Aufnahmeeinheit vom Ruhezustand in den Bereitschaftszustand begrenzbar sein. Vorzugsweise weist das Bodenelement zumindest zwei Auflagemittel und jedes der beiden Öffnungselemente eine Auflagefläche auf, wobei auf jeder der Auflageflächen vorteilhafterweise eines der Auflagemittel auflegbar sein kann. Dadurch kann im Bereitschaftszustand eine stabile Ausrichtung des Bodenelementes zu den Öffnungselementen gewährleistet sein. Insbesondere kann das Bodenelement dadurch vorteilhaft an den Öffnungselementen lagerbar sein, um den losen Gegenstand im Aufnahmebereich abzustützen.

Ferner ist bei einer erfindungsgemäßen Ablagevorrichtung vorgesehen, dass die Aufnahmeeinheit ein Vorspannelement in Form einer Druckfeder aufweist, durch welches die Öffnungselemente in den Bereitschaftszustand vorgespannt sind. Das Vorspannelement kann zwischen den beiden Öffnungselementen und/oder an den beiden Öffnungselementen gelagert sein. Dazu können die Öffnungselemente Lagerzapfen zur Aufnahme des Vorspannelementes aufweisen. Durch das Vorspannelement kann ermöglicht sein, dass die Aufnahmeeinheit bei Betätigung automatisch vom Ruhezustand in den Bereitschaftszustand überführbar ist. Weiterhin kann dadurch verhinderbar sein, dass der Aufnahmebereich im Bereitschaftszustand unbeabsichtigt verkleinert wird und dadurch den losen Gegenstand beschädigt oder eine Aufnahme desselben verhindert. Das Vorspannelement kann eine Feder, z.B. in Form einer Druckfeder, umfassen. Vorteilhafterweise kann das Vorspannelement im Bereitschaftszustand zwischen dem Aufnahmebereich und dem Gehäuseelement angeordnet sein, so dass ein Bauraumbedarf in einem vorderen, einem Benutzer zugewandten Bereich der Ablagevorrichtung verringert sein kann.

Es ist ferner bei einer erfindungsgemäßen Ablagevorrichtung denkbar, dass das erste und zweite Öffnungselement Rastmittel aufweisen, durch welche das erste und zweite Öffnungselement im Bereitschaftszustand zueinander fixierbar sind. Insbesondere können die Rastmittel im Bereitschaftszustand dem Vorspannelement entgegenwirken. Durch die Rastmittel kann eine Bewegung der Öffnungselemente zueinander begrenzbar sein. Die Rastmittel können hakenartig ausgestaltet sein, um ein Ineinandergreifen der Rastmittel im Bereitschaftszustand zu ermöglichen. Weiterhin kann vorgesehen sein, dass das Rastmittel des ersten Öffnungselementes das Rastmittel des zweiten Öffnungselementes umgreift. Dadurch kann in einfacher Art und Weise die Relativbewegung der Öffnungselemente zueinander ermöglicht sein. Ferner kann vorgesehen sein, dass die Öffnungselemente beim Überführen der Aufnahmeeinheit vom Ruhezustand in den Bereitschaftszustand durch die Rastmittel aneinander geführt sind.

Weiterhin kann bei einer erfindungsgemäßen Ablagevorrichtung vorteilhafterweise vorgesehen sein, dass die Aufnahmeeinheit zum Überführen der Aufnahmeeinheit vom Bereitschaftszustand in den Ruhezustand derart durch eine auf die Aufnahmeeinheit wirkende Kraft in einer ersten Richtung betätigbar ist, dass eine Relativbewegung des ersten und zweiten Öffnungselementes zumindest teilweise in einer zweiten Richtung erfolgt, insbesondere wobei sich der Aufnahmebereich bei der Relativbewegung des ersten und zweiten Öffnungselementes in der zweiten Richtung verkleinert. Dadurch kann sich eine einfache Bedienung für einen Benutzer der Ablagevorrichtung ergeben. Insbesondere kann durch eine äußere Kraft der Aufnahmebereich automatisch verkleinerbar sein. Bei der äußeren Kraft kann es sich vorteilhafterweise um eine Betätigungskraft eines Benutzers handeln. Dadurch kann die Aufnahmeeinheit manuell vom Bereitschaftszustand in den Ruhezustand überführbar sein. Es ist jedoch ebenfalls denkbar, dass es sich bei der äußeren Kraft um eine elektromotorische Kraft einer Antriebseinheit der Ablagevorrichtung handelt, die die Aufnahmeeinheit in das Gehäuseelement schiebt oder zieht.

Ferner kann bei einer erfindungsgemäßen Ablagevorrichtung vorteilhafterweise vorgesehen sein, dass zumindest eines der Öffnungselemente und/oder das Bodenelement ein Leitmittel aufweist, durch welches das Öffnungselement und/oder das Bodenelement beim Überführen der Aufnahmeeinheit vom Bereitschaftszustand in den Ruhezustand an einem Gegenführungsmittel des Gehäuseelementes führbar ist. Vorteilhafterweise können das Bodenelement und beide Öffnungselemente jeweils zumindest ein Leitmittel aufweisen. Dadurch kann die Bewegung der Öffnungselemente und des Bodenelementes beim Überführen der Aufnahmeeinheit vom Ruhezustand in den Bereitschaftszustand in definierter Art und Weise erfolgen. Ferner kann das Öffnungselement und/oder das Bodenelement beim Überführen der Aufnahmeeinheit vom Bereitschaftszustand in den Ruhezustand durch das Leitmittel derart leitbar sein, dass der Aufnahmebereich automatisch verkleinert wird. Insbesondere wird dadurch bei einfacher Bedienung ermöglicht, dass die Ablagevorrichtung in den Ruhezustand überführbar ist, in welchem der Platzbedarf der Ablagevorrichtung reduziert ist.

Weiterhin ist es bei einer erfindungsgemäßen Ablagevorrichtung denkbar, dass das Leitmittel eine Außenfläche des Öffnungselementes und/oder des Bodenelementes umfasst, welche, insbesondere zur ersten Richtung, schräg ausgebildet ist. Insbesondere kann die Außenfläche an einem Gegenleitmittel des Gehäuseelementes, insbesondere in Form eines Öffnungsrandes, leitbar sein. Durch eine schräge Ausführung des Leitmittels kann eine besonders einfache Führungsmöglichkeit bereitgestellt werden, insbesondere ohne dass zusätzliche Bauteile, wie Führungsschienen oder dergleichen erforderlich sind. Insbesondere kann die jeweilige Außenfläche schräg zu einem Gegenleitmittel des Gehäuseelementes verlaufen. Dadurch kann eine Kraft, die in der ersten Richtung verläuft, eine Reaktionskraft am Leitmittel und/oder am Gegenleitmittel erzeugen, welche eine Verstellung des jeweiligen Öffnungselementes und/oder des Bodenelementes initiiert.

Weiterhin kann bei einer erfindungsgemäßen Ablagevorrichtung vorteilhafterweise vorgesehen sein, dass das erste Öffnungselement, das zweite Öffnungselement und/oder das Bodenelement jeweils einteilig als Kunststoff-Spritzgussteil ausgestaltet sind. Insbesondere aufgrund der Aufteilung einer Ausbildung des Aufnahmebereiches auf mehrere Bauteile können diese vorteilhaft in einem Kunststoff-Spritzguss-Verfahren herstellbar sein. Bspw. kann sich dadurch eine vereinfachte Entformung der Bauteile ergeben. Durch die Ausgestaltung als Kunststoff-Spritzgussteil können die Herstellkosten der Ablagevorrichtung reduzierbar sein. Weiterhin bietet ein Kunststoff-Spritzguss den Vorteil, dass geringe Wandstärken, insbesondere bei geringen Toleranzen, herstellbar sind, so dass der Bauraumbedarf der Ablagevorrichtung reduziert sein kann und die Einzelteile vorteilhaft miteinander wirken können.

Weiterhin ist es bei einer erfindungsgemäßen Ablagevorrichtung denkbar, dass die Ablagevorrichtung eine Antriebseinheit aufweist, durch welche die Aufnahmeeinheit vom Ruhezustand in den Bereitschaftszustand bringbar ist und/oder dass die Ablagevorrichtung einen Lösemechanismus aufweist, durch welchen die Aufnahmeeinheit über eine Druckkraft, insbesondere auf eine Vorderseite der Aufnahmeeinheit, vom Ruhezustand in den Bereitschaftszustand bringbar ist. Insbesondere kann die Antriebseinheit den Lösemechanismus aufweisen. Die Antriebseinheit kann z.B. einen Linearmotor und/oder einen Elektromotor umfassen. Weiterhin kann die Antriebseinheit mit einem der Öffnungselemente wirken, um das Öffnungselement anzutreiben. Insbesondere ist es ferner denkbar, dass die Aufnahmeeinheit durch die Antriebseinheit vom Bereitschaftszustand in den Ruhezustand bringbar ist. Der Lösemechanismus kann vorteilhafterweise ein Federelement umfassen. Durch das Federelement kann die Aufnahmeeinheit in den Ruhezustand und/oder in den Bereitschaftszustand verstellbar sein. Weiterhin ist es denkbar, dass die Aufnahmeeinheit durch den Lösemechanismus in den Bereitschaftszustand oder in den Ruhezustand vorgespannt ist. Der Bereitschaftszustand oder der Ruhezustand kann dabei z.B. durch das Vorspannelement aufrechterhaltbar sein. Weiterhin ist es denkbar, dass der Lösemechanismus einen Schaltmechanismus umfasst, bei welchem ein Druck auf eine Vorderseite der Vorderseite einen Zustandswechsel zwischen dem Ruhezustand und dem Bereitschaftszustand und/oder umgekehrt erzeugt.

Vorzugsweise kann bei einer erfindungsgemäßen Ablagevorrichtung vorgesehen sein, dass beim Überführen der Aufnahmeeinheit vom Ruhezustand in den Bereitschaftszustand lediglich das Führungselement, das erste und zweite Öffnungselement, das Bodenelement und das Vorspannelement eine Bewegung ausführen, und/oder dass die Aufnahmeeinheit aus dem Führungselement, dem ersten und zweiten Öffnungselement, dem Bodenelement und dem Vorspannelement besteht. Somit kann die Aufnahmeeinheit einen besonders einfachen Aufbau aufweisen. Durch die geringe Anzahl an einzelnen Bauteilen können ferner die Herstellkosten gering gehalten werden.

Gemäß einem weiteren Aspekt der Erfindung ist ein Verkehrsmittel vorgesehen. Das Verkehrsmittel weist einen Innenraum auf, der für einen Benutzer zugänglich ist. Der Innenraum weist ferner ein Ausstattungselement auf, in welches eine erfindungsgemäße Ablagevorrichtung integriert ist.

Somit bringt ein erfindungsgemäßes Verkehrsmittel die gleichen Vorteile mit sich, wie sie bereits ausführlich mit Bezug auf eine erfindungsgemäße Ablagevorrichtung beschrieben worden sind. Bei dem Verkehrsmittel kann es sich bspw. um ein Fahrzeug, insbesondere ein Kraftfahrzeug, handeln. Vorzugsweise handelt es sich bei dem Verkehrsmittel um einen Wohnwagen, einen Reisebus, einen Zug oder ein Flugzeug. Bei dem Ausstattungselement kann es sich z.B. um eine Armlehne handeln. Somit können durch die erfindungsgemäße Ablagevorrichtung besonders schmale Armlehnen verwendet werden, welche wenig Platz beanspruchen. Die Integration der Ablagevorrichtung ist dabei vorteilhaft möglich. Es ist jedoch ebenso denkbar, dass es sich bei dem Ausstattungselement um ein Armaturenbrett, eine Verkleidung oder ein anderes Element eines Interieurs des Verkehrsmittels handelt.

Gemäß einem weiteren Aspekt der Erfindung ist ein Verfahren zum Betreiben einer erfindungsgemäßen Ablagevorrichtung, die zur Aufnahme eines losen Gegenstands geeignet ist. Dabei umfasst das Verfahren folgende Schritte:
- (Seitliches) Bewegen eines ersten und eines zweiten Öffnungselementes einer Aufnahmeeinheit der Ablagevorrichtung relativ zueinander, so dass die Aufnahmeeinheit von einem Ruhezustand, in welchem die Aufnahme des losen Gegenstands in einem Aufnahmebereich der Aufnahmeeinheit verhindert ist, in einen Bereitschaftszustand, in welchem die Aufnahme des losen Gegenstands im Aufnahmebereich ermöglicht ist, überführt wird.

Somit bringt ein erfindungsgemäßes Verfahren die gleichen Vorteile mit sich, wie sie bereits Ausführlich in Bezug auf eine erfindungsgemäße Ablagevorrichtung und/oder ein erfindungsgemäßes Verkehrsmittel beschrieben worden sind.

Bei den Ortsangaben im Text "seitlich" oder "horizontal" bzw. "oben" oder "unten" bzw. "vertikal" handelt sich um Angaben zur im Wesentlichen horizontalen Einbausituation der erfindungsgemäßen Ablagevorrichtung im Verkehrsmittel.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: ein Verkehrsmittel mit einer erfindungsgemäßen Ablagevorrichtung
- Figur 2: eine Explosionsansicht der erfindungsgemäßen Ablagevorrichtung in einem ersten Ausführungsbeispiel,
- Figuren 3a+b: die Ablagevorrichtung in einem Ruhezustand und in einem Bereitschaftszustand,
- Figuren 4a-d: ein Überführen einer Aufnahmeeinheit der Ablagevorrichtung vom Ruhezustand in den Bereitschaftszustand,
- Figur 5: Rastmittel von Öffnungselementen der Ablagevorrichtung im Bereitschaftszustand,
- Figur 6: eine Lagerung eines Bodenelementes auf den Öffnungselementen der Ablagevorrichtung im Bereitschaftszustand, und
- Figur 7: ein Antrieb einer erfindungsgemäßen Ablagevorrichtung.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

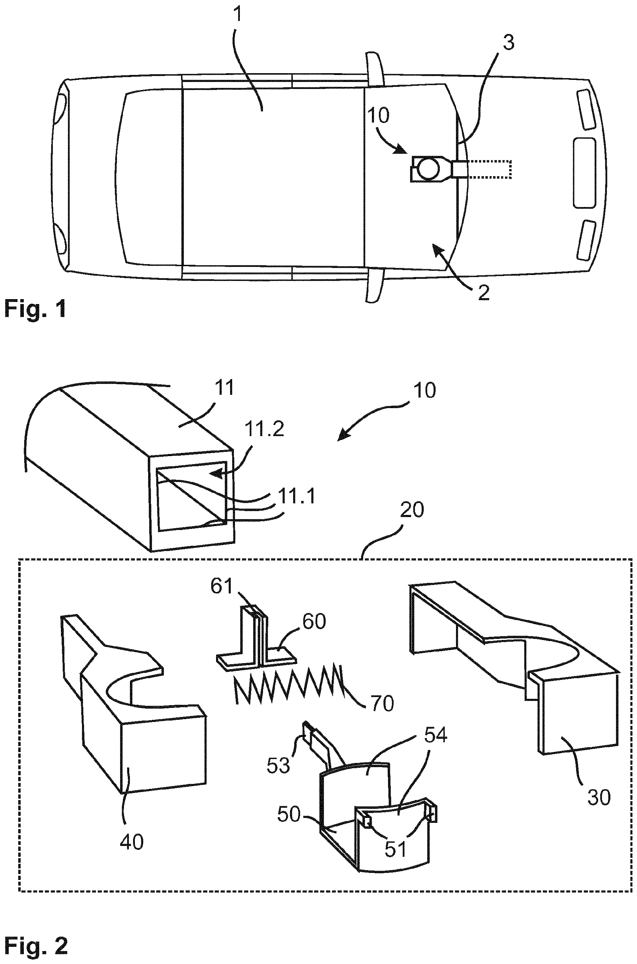

Figur 1 zeigt ein erfindungsgemäßes Verkehrsmittel 1 mit einem Innenraum 2, in welchem ein Passagier sich aufhalten kann. Im Innenraum 2 ist ein Ausstattungselement 3 angeordnet, in welches eine erfindungsgemäße Ablagevorrichtung 10 integriert ist. Hier dargestellt ist das Verkehrsmittel 1 in Form eines Kraftfahrzeuges und das Ausstattungselement 3 in Form eines Armaturenbrettes. Es ist jedoch ebenso denkbar, dass das Ausstattungselement 3 und/oder das Verkehrsmittel 1 anders ausgestaltet sind. Insbesondere kann es sich bei dem Verkehrsmittel 1 um einen Wohnwagen, einen Reisebus, einen Zug oder ein Flugzeug handeln. Bei dem Ausstattungselement 3 kann es sich z.B. um eine Armlehne handeln. Die Ablagevorrichtung 10 hat insbesondere die Funktion eines Getränkehalters, vorzugsweise in Form eines Becherhalters.

Figur 2 zeigt die Ablagevorrichtung 10 in einer schematischen Explosionsansicht. Die Ablagevorrichtung 10 weist ein Gehäuseelement 11 auf, welches in das Ausstattungselement 3 integriert ist. Dabei ist es denkbar, dass das Gehäuseelement 11 und das Ausstattungselement 3 einteilig ausgestaltet sind. Es ist jedoch ebenso denkbar, dass das Gehäuseelement 11 separat zum Ausstattungselement 3 und insbesondere einzeln handhabbar vorgesehen ist.

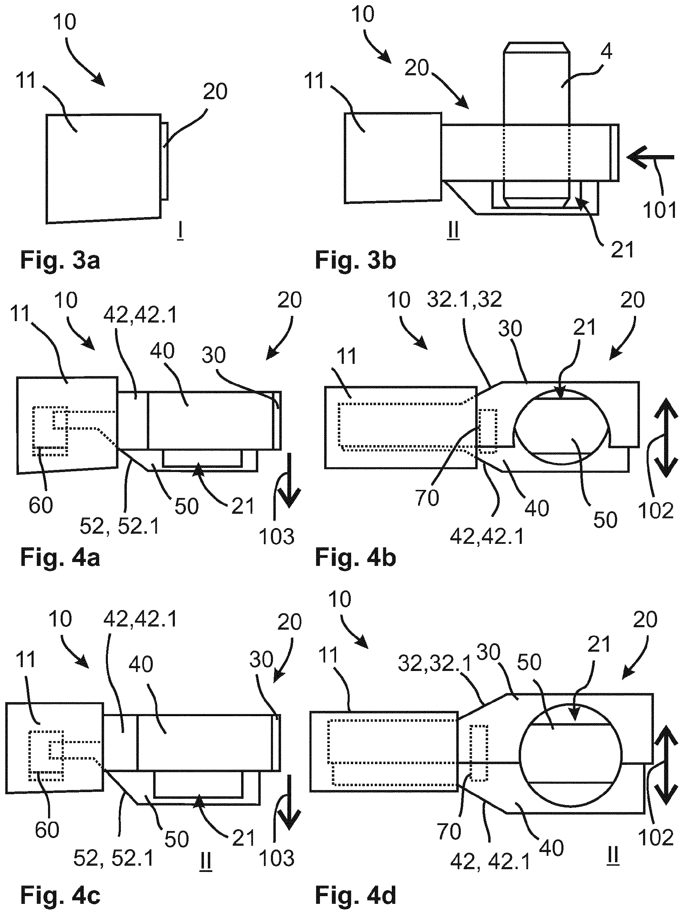

In eine Gehäuseöffnung 11.2, die einen Zugang zu einem Gehäusetunnel darstellt, ist eine Aufnahmeeinheit 20 der Ablagevorrichtung 10 integrierbar, welche in einen Ruhezustand I bringbar ist, in welchem eine Aufnahme eines losen Gegenstandes 4 in einem Aufnahmebereich 21 der Aufnahmeeinheit 20 verhindert ist. Ferner ist die Aufnahmeeinheit 20 in einen Bereitschaftszustand II, in welchem die Aufnahme des losen Gegenstands 4 in dem Aufnahmebereich 21 ermöglicht ist, bringbar. Der Ruhezustand I ist in Figur 3a dargestellt. Dabei befindet sich die Aufnahmeeinheit 20 vollständig oder nahezu vollständig in dem Gehäuseelement 11. Insbesondere ist die Aufnahmeeinheit 20 dabei über die Gehäuseöffnung 11.2 in den Gehäusetunnel eingeschoben. Der Bereitschaftszustand II ist ferner in Figur 3b dargestellt. Dabei befindet sich die Aufnahmeeinheit 20 zumindest teilweise außerhalb des Gehäuseelementes 11, so dass ein Aufnahmebereich 21, insbesondere vor dem Gehäuseelement 11, ausgebildet ist. Wie dargestellt, kann der lose Gegenstand 4 im Bereitschaftszustand II der Aufnahmeeinheit 20 im Aufnahmebereich 21 platziert, insbesondere abgestellt, werden. Ist der lose Gegenstand 4 nicht im Aufnahmebereich 21 angeordnet, kann die Aufnahmeeinheit 20 im Gehäuseelement 11 durch eine, insbesondere manuelle, Kraft in einer ersten Richtung 101 im Gehäuseelement 11 versenkt und damit in den Ruhezustand I überführt werden.

In den Figuren 4a bis 4d ist ferner ein Bewegungsablauf eines Verfahrens zum Betreiben der Ablagevorrichtung 10 dargestellt, wobei die Aufnahmeeinheit 20 vom Ruhezustand I in den Bereitschaftszustand II überführt wird. Die Ablagevorrichtung 10 ist in den Figuren 4a und 4c in einer Seitenansicht und in den Figuren 4b und 4d in einer Draufsicht dargestellt.

So zeigen die Figuren 4a und 4b eine Zwischenposition der Aufnahmeeinheit 20, in welcher sich die Aufnahmeeinheit 20 bereits entgegen der ersten Richtung 101 bewegt hat. Die Figuren 4c und 4d zeigen die Aufnahmeeinheit 20 im Bereitschaftszustand II. Die Aufnahmeeinheit 20 weist ein erstes und ein zweites Öffnungselement 30, 40 auf, die derart (seitlich) relativ zueinander bewegbar sind, dass der Aufnahmebereich 21 beim Überführen der Aufnahmeeinheit 20 vom Ruhezustand I in den Bereitschaftszustand II vergrößerbar ist. Dazu bewegen sich die Öffnungselemente 30, 40 entlang einer zweiten Richtung 102 entgegengesetzt zueinander.

Wie in Figur 2 dargestellt, weist die Aufnahmeeinheit 20 ein Vorspannelement 70 auf, welches zwischen den Öffnungselementen 30, 40 angeordnet ist. Durch das Vorspannelement 70 ist die Aufnahmeeinheit 20 insbesondere in den Bereitschaftszustand II vorgespannt. Dazu ist das Vorspannelement 70 zwischen den Öffnungselementen 30, 40 angeordnet, so dass die Öffnungselemente 30, 40 entlang der zweiten Richtung 102 auseinander gedrückt werden. Vorzugsweise handelt es sich bei dem Vorspannelement 70 um eine Druckfeder.

Gleichzeitig mit der (seitlichen) Relativbewegung der Öffnungselemente 30, 40, bewegt sich auch ein Bodenelement 50 der Aufnahmeeinheit 20 in einer dritten Richtung 103 (Absenkrichtung) beim Überführen der Aufnahmeeinheit 20 vom Ruhezustand I in den Bereitschaftszustand II. Dadurch wird der Aufnahmebereich 21 beim Überführen der Aufnahmeeinheit 20 vom Ruhezustand I in den Bereitschaftszustand II auch in der dritten Richtung 103 vergrößert. Das Bodenelement 50 dient im Bereitschaftszustand II insbesondere dazu, den losen Gegenstand 4 in vertikaler Richtung abzustützen. Ferner weist das Bodenelement 50 Wandungen 54 auf, die den losen Gegenstand 4 in horizontaler Richtung stabilisieren oder zumindest am Herausfallen aus dem Aufnahmebereich 21 hindern können. Die Wandungen 54 sind insbesondere einstückig mit dem Bodenelement 50 ausgebildet. Dadurch ergeben sich insbesondere gestalterische Vorteile für die Öffnungselemente 30, 40.

Wie in den Figuren 4a und 4c dargestellt, wird das Bodenelement 50 beim Überführen der Aufnahmeeinheit 20 vom Ruhezustand I in den Bereitschaftszustand II durch ein Führungselement 60 mittig zwischen den Öffnungselementen 30, 40 und/oder mittig zum Gehäuseelement 11 geführt. Dazu weist das Bodenelement 50 ein, insbesondere in Figur 2 dargestelltes, Gegenführungsmittel 53 auf, das in einem Führungsmittel 61 des Führungselementes 60 führbar ist. Das Führungsmittel 61 ist vorzugsweise kulissen- und/oder schienenartig ausgeführt, insbesondere so dass sich das Bodenelement 50 relativ zum Führungselement 60 in der dritten Richtung 103 bewegen kann. Das Führungselement 60 ist ferner im Gehäuseelement 11, insbesondere im Gehäusetunnel, seitlich abgestützt. Weiterhin ist das Führungselement 60 im Gehäuseelement 11 gleitend gelagert, um eine Bewegung des Führungselementes 60 entlang der ersten Richtung 101 zu ermöglichen.

Insbesondere um eine gleichförmige Bewegung der Öffnungselemente 30, 40 und des Bodenelementes 50 zu ermöglichen, weisen die Öffnungselemente 30, 40 und das Bodenelement 50 Leitmittel 32, 42, 52 auf. Die Leitmittel 32, 42, 52 umfassen Außenflächen 32.1, 42.1, 52.1 der Öffnungselemente 30, 40 und des Bodenelementes 50, die schräg zur ersten Richtung 101 und/oder zum Gehäuseelement 11 angeordnet sind. Dadurch können die Leitmittel 32, 42, 52 an Gegenleitmitteln 11.1, insbesondere in Form eines Randes der Gehäuseöffnung 11.2 des Gehäuseelementes 11, gleiten. Dadurch entfernen sich die Öffnungselemente 30, 40 und das Bodenelement 50 beim Überführen der Aufnahmeeinheit 20 vom Ruhezustand I in den Bereitschaftszustand II automatisch voneinander. Beim Überführen der Aufnahmeeinheit 20 vom Bereitschaftszustand II in den Ruhezustand I verringern die Öffnungselemente 30, 40 und das Bodenelement 50 automatisch einen Abstand zueinander.

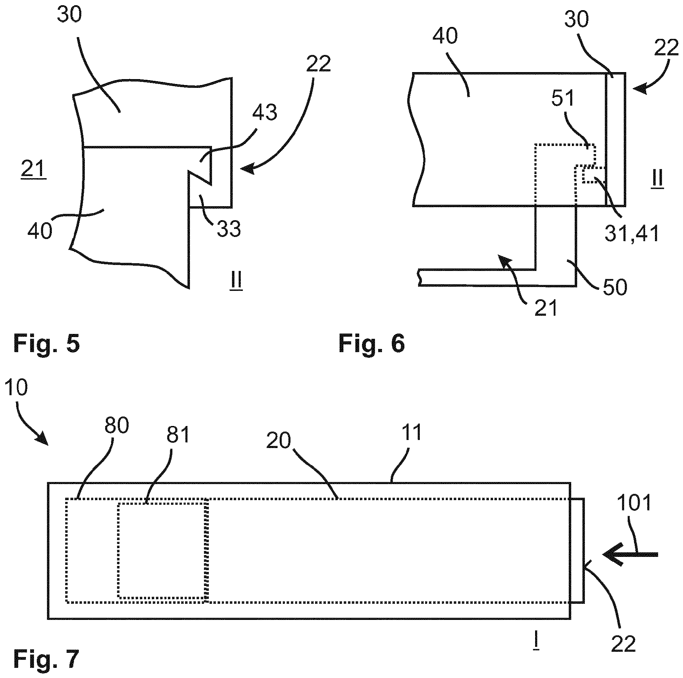

Figur 5 zeigt eine einem Benutzer zugewandte, vom Gehäuseelement 11 abgewandte Vorderseite 22 der Aufnahmeeinheit 20 in einer schematischen Detailansicht eines Querschnittes in der Draufsicht. Die Öffnungselemente 30, 40 weisen Rastmittel 33, 43 auf, durch welche eine Relativbewegung der Öffnungselemente 30, 40 im Bereitschaftszustand II begrenzbar ist. Wie dargestellt, sind die Rastmittel 33, 43 hakenartig und komplementär zueinander ausgestaltet, so dass die Rastmittel 33, 43 zumindest in einer Richtung 102 ineinander verhakt werden können. Dabei ist vorgesehen, dass das erste Öffnungselement 30 das zweite Öffnungselement 40 umgreift. Vorzugsweise können die Öffnungselemente 30, 40 dadurch gleichzeitig an einer Vorderseite 22 der Aufnahmeeinheit 20 aneinander geführt sein.

Figur 6 zeigt ferner eine Seitenansicht der Vorderseite 22 der Aufnahmeeinheit 20 in einer schematischen Detailansicht. Die Aufnahmeeinheit 20 befindet sich dabei im Bereitschaftszustand II. Um das Bodenelement 50, insbesondere auch bei auf dem Bodenelement 50 abgestelltem losen Gegenstand 4, im Bereitschaftszustand II an der Vorderseite 22 abzustützen, weisen die Öffnungselemente 30, 40 Auflageflächen 31, 41 auf, auf welchen Auflagemittel 51 des Bodenelementes 50 abstützbar sind. Vorzugsweise weist jedes der Öffnungselemente 30, 40 eine Auflagefläche 31, 41 auf, auf welchem jeweils ein Auflagemittel 51 des Bodenelementes 50 abstützbar ist. Dadurch kann das Bodenelement 50 im Bereitschaftszustand II der Aufnahmeeinheit 20 insbesondere symmetrisch abgestützt werden.

Wie in Figur 2 dargestellt, kann die Aufnahmeeinheit 20 vorzugsweise aus den beiden Öffnungselementen 30, 40, dem Bodenelement 50, dem Führungselement 60 und dem Vorspannelement 70 bestehen. Vorteilhafterweise können die Öffnungselemente 30, 40, das Bodenelement 50 und/oder das Führungselement 60 jeweils als Kunststoff-Spritzgussteil ausgestaltet sein.

Figur 7 zeigt eine erfindungsgemäße Ablagevorrichtung 10 mit einer Aufnahmeeinheit 20 in einem Ruhezustand I. Dabei ist die Aufnahmeeinheit 20 zumindest im Wesentlichen in einem Gehäuseelement 11 angeordnet. Weiterhin ist im Gehäuseelement 11 eine Antriebseinheit 80 mit einem Lösemechanismus 81 vorgesehen. Durch die Antriebseinheit 80 und/oder den Lösemechanismus 81 kann die Aufnahmeeinheit 20 insbesondere vom Ruhezustand I in einen Bereitschaftszustand II zur Aufnahme eines losen Gegenstandes 4 überführt werden. Dazu kann die Antriebseinheit 80 z.B. einen Motor umfassen. Weiterhin ist es denkbar, dass die Aufnahmeeinheit 20 im Ruhezustand I durch den Lösemechanismus 81 freigebbar ist und automatisch in den Bereitschaftszustand II bringbar ist. Dazu kann der Lösemechanismus 81 dazu ausgebildet sein, die Aufnahmeeinheit 20 im Ruhezustand I in Abhängigkeit von einer äußeren Kraft in einer ersten Richtung 101 auf eine Vorderseite 22 der Aufnahmeeinheit 20 freizugeben.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen, soweit der Gegenstand den Rahmen der Ansprüche nicht überschreitet.

### Bezugszeichenliste

- 1: Verkehrsmittel
- 2: Innenraum
- 3: Ausstattungselement
- 4: loser Gegenstand, insbesondere Flasche oder Dose

- 10: Ablagevorrichtung
- 11: Gehäuseelement
- 11.1: Gegenleitmittel
- 11.2: Gehäuseöffnung

- 20: Aufnahmeeinheit
- 21: Aufnahmebereich
- 22: Vorderseite

- 30: erstes Öffnungselement
- 31: Auflagefläche
- 32: Leitmittel
- 32.1: Außenfläche
- 33: Rastmittel

- 40: zweites Öffnungselement
- 41: Auflagefläche
- 42: Leitmittel
- 42.1: Außenfläche
- 43: Rastmittel

- 50: Bodenelement
- 51: Auflagemittel
- 52: Leitmittel
- 52.1: Außenfläche 52.1
- 53: Gegenführungsmittel
- 54: Wandung

- 60: Führungselement
- 61: Führungsmittel

- 70: Vorspannelement

- 80: Antriebseinheit
- 81: Lösemechanismus

- 101: erste Richtung (Einfahrrichtung)
- 102: zweite Richtung (seitliche bzw. horizontale Richtung, links / rechts)
- 103: dritte Richtung (Absenkrichtung bzw. vertikale Richtung)

- I: Ruhezustand
- II: Bereitschaftszustand

## Patentansprüche

1. Ablagevorrichtung (10) zur Aufnahme zumindest eines losen Gegenstandes (4), insbesondere für ein Verkehrsmittel (1), aufweisend
eine Aufnahmeeinheit (20), die zumindest in einen Ruhezustand (I) und einen Bereitschaftszustand (II) bringbar ist, wobei die Aufnahme des losen Gegenstands (4) in einem Aufnahmebereich (21) der Aufnahmeeinheit (20) im Ruhezustand (I) verhindert ist und im Bereitschaftszustand (II) ermöglicht ist,
wobei die Aufnahmeeinheit (20) zumindest ein erstes und ein zweites Öffnungselement (30, 40) aufweist, die beim Überführen der Aufnahmeeinheit (20) vom Ruhezustand (I) in den Bereitschaftszustand (II) derart relativ zueinander bewegbar sind, dass der Aufnahmebereich (21) vergrößert wird, wobei die Öffnungselemente (30, 40) zueinander verschwenkbar sind,
**dadurch gekennzeichnet,**
**dass** die Aufnahmeeinheit (20) ein Vorspannelement (70) in Form einer Druckfeder aufweist, durch welches die Öffnungselemente (30, 40) in den Bereitschaftszustand (II) vorgespannt sind.

2. Ablagevorrichtung (10) nach Anspruch 1,
**dadurch gekennzeichnet,**
**dass** ein Gehäuseelement (11) vorgesehen ist und die Aufnahmeeinheit (20) im Ruhezustand (I) zumindest teilweise innerhalb des Gehäuseelementes (11) angeordnet ist, insbesondere wobei sich der Aufnahmebereich (21) im Ruhezustand (I) vollständig innerhalb des Gehäuseelementes (11) befindet.

3. Ablagevorrichtung (10) nach Anspruch 1 oder 2,
**dadurch gekennzeichnet,**
**dass** die Aufnahmeeinheit (20) zwischen dem ersten und zweiten Öffnungselement (30, 40) ein Bodenelement (50) aufweist, auf welchem der lose Gegenstand (4) abstellbar ist, insbesondere wobei zumindest eines der Öffnungselemente (30, 40) relativ zum Bodenelement (50) bewegbar ist.

4. Ablagevorrichtung (10) nach einem der vorhergehenden Ansprüche,
**dadurch gekennzeichnet,**
**dass** die Aufnahmeeinheit (20) ein Führungselement (60) zur, insbesondere mittigen, Führung des Bodenelementes (50) zwischen dem ersten und zweiten Öffnungselement (30, 40) aufweist,
und/oder dass das Bodenelement (50) zum Überführen der Aufnahmeeinheit (20) vom Ruhezustand (I) in den Bereitschaftszustand (II) absenkbar ist, insbesondere wobei das Führungselement (60) ein Führungsmittel (61) aufweist, in welchem das Bodenelement (50) beweglich gelagert ist.

5. Ablagevorrichtung (10) nach einem der vorhergehenden Ansprüche,
**dadurch gekennzeichnet,**
**dass** zumindest eines der Öffnungselemente (30, 40) eine Auflagefläche (31, 41) aufweist, auf welcher ein Auflagemittel (51) des Bodenelementes (60) im Bereitschaftszustand (II) auflegbar ist.

6. Ablagevorrichtung (10) nach einem der vorhergehenden Ansprüche,
**dadurch gekennzeichnet,**
**dass** das erste und zweite Öffnungselement (30, 40) Rastmittel (33, 43) aufweisen, durch welche das erste und zweite Öffnungselement (30, 40) im Bereitschaftszustand (II) zueinander fixierbar sind.

7. Ablagevorrichtung (10) nach einem der vorhergehenden Ansprüche,
**dadurch gekennzeichnet,**
**dass** die Aufnahmeeinheit (20) zum Überführen der Aufnahmeeinheit (20) vom Bereitschaftszustand (II) in den Ruhezustand (I) derart durch eine auf die Aufnahmeeinheit (20) wirkende Kraft in einer ersten Richtung (101) betätigbar ist, dass eine Relativbewegung des ersten und zweiten Öffnungselementes (30, 40) zumindest teilweise in einer zweiten Richtung (102) erfolgt, insbesondere wobei sich der Aufnahmebereich (20.1) bei der Relativbewegung des ersten und zweiten Öffnungselementes (30, 40) in der zweiten Richtung (102) verkleinert.

8. Ablagevorrichtung (10) nach einem der vorhergehenden Ansprüche,
**dadurch gekennzeichnet,**
**dass** zumindest eines der Öffnungselemente (30, 40) und/oder das Bodenelement (50) ein Leitmittel (32, 42, 52) aufweist, durch welches das Öffnungselement (30, 40) und/oder das Bodenelement (50) beim Überführen der Aufnahmeeinheit (20) vom Bereitschaftszustand (II) in den Ruhezustand (I) an einem Gegenführungsmittel (11.1) des Gehäuseelementes (11) führbar ist.

9. Ablagevorrichtung (10) nach einem der vorhergehenden Ansprüche,
**dadurch gekennzeichnet,**
**dass** das Leitmittel (32, 42, 52) eine Außenfläche (32.1, 42.1) des Öffnungselementes (30, 40) und/oder des Bodenelementes (50) umfasst, welche, insbesondere zur ersten Richtung (101), schräg ausgebildet ist.

10. Ablagevorrichtung (10) nach einem der vorhergehenden Ansprüche,
**dadurch gekennzeichnet,**
**dass** das erste Öffnungselement (30), das zweite Öffnungselement (40) und/oder das Bodenelement (50) jeweils einteilig als Kunststoff-Spritzgussteil ausgestaltet sind.

11. Ablagevorrichtung (10) nach einem der vorhergehenden Ansprüche,
**dadurch gekennzeichnet,**
**dass** eine Antriebseinheit (80) vorgesehen ist, durch welche die Aufnahmeeinheit (20) vom Ruhezustand (I) in den Bereitschaftszustand (II) bringbar ist und/oder dass ein Lösemechanismus (81) vorgesehen ist, durch welchen die Aufnahmeeinheit (20) über eine Druckkraft, insbesondere auf eine Vorderseite (22) der Aufnahmeeinheit (20), vom Ruhezustand (I) in den Bereitschaftszustand (II) bringbar ist.

12. Ablagevorrichtung (10) nach einem der vorhergehenden Ansprüche,
**dadurch gekennzeichnet,**
**dass** beim Überführen der Aufnahmeeinheit (20) vom Ruhezustand (I) in den Bereitschaftszustand (II) lediglich das Führungselement (60), das erste und zweite Öffnungselement (30, 40), das Bodenelement (50) und das Vorspannelement (70) eine Bewegung ausführen, und/oder dass die Aufnahmeeinheit (20) aus dem Führungselement (60), dem ersten und zweiten Öffnungselement (30, 40), dem Bodenelement (50) und dem Vorspannelement (70) besteht.

13. Verkehrsmittel (1) aufweisend
einen Innenraum (2), der für einen Benutzer zugänglich ist,
wobei der Innenraum (2) ein Ausstattungselement (3) aufweist, in welches eine Ablagevorrichtung (10) nach einem der vorhergehenden Ansprüche integriert ist.

14. Verfahren zum Betreiben einer Ablagevorrichtung (10) nach einem der Ansprüche 1 bis 12 zur Aufnahme eines losen Gegenstands (4) durch die Ablagevorrichtung (10), umfassend folgende Schritte:
- Bewegen eines ersten und eines zweiten Öffnungselementes (30, 40) einer Aufnahmeeinheit (20) der Ablagevorrichtung (10) relativ zueinander, so dass die Aufnahmeeinheit (20) von einem Ruhezustand (I), in welchem die Aufnahme des losen Gegenstands (4) in einem Aufnahmebereich (21) der Aufnahmeeinheit (20) verhindert ist, in einen Bereitschaftszustand (II), in welchem die Aufnahme des losen Gegenstands (4) im Aufnahmebereich (21) ermöglicht ist, überführt wird.

## Claims

1. Storage device (10) for receiving at least one loose object (4) , in particular for a means of transport (1) , comprising
a receiving unit (20) which can be brought into at least a rest state (I) and a receiving state (II) , wherein receiving of the loose object (4) in a receiving region (21) of the receiving unit (20) being prevented in the rest state (I) and being enabled in the receiving state (II) ,
wherein the receiving unit (20) has at least a first and a second opening element (30 , 40) which , when the receiving unit (20) is transferred from the rest state (I) to the receiving state (II) , can be moved relative to one another in such a way that the receiving region (21) is enlarged , wherein the opening elements (30 , 40) can be pivoted relative to one another,
**characterized in that**
the receiving unit (20) has a prestressing element (70) in the form of a compression spring by means of which the opening elements (30 , 40) are prestressed into the receiving state (II).

2. Storage device (10) according to claim 1 ,
**characterized in that**
a housing element (11) is provided and the receiving unit (20) is arranged at least partially within the housing element (11) in the rest state (I) , in particular the receiving region (21) being located completely within the housing element (11) in the rest state (I).

3. Storage device (10) according to claim 1 or 2 ,
**characterized in that**
the receiving unit (20) has , between the first and second opening elements (30 , 40) , a base element (50) on which the loose object (4) can be placed , in particular at least one of the opening elements (30 , 40) being movable relative to the base element (50).

4. Storage device (10) according to any one of the preceding claims ,
**characterized in that**
the receiving unit (20) has a guide element (60) for guiding the base element (50) , in particular centrally , between the first and second opening elements (30 , 40) , and/or **in that** the base element (50) can be lowered for transferring the receiving unit (20) from the rest state (I) to the receiving state (II) , in particular the guide element (60) having a guide means (61) in which the base element (50) is movably mounted.

5. Storage device (10) according to any one of the preceding claims ,
**characterized in that**
at least one of the opening elements (30 , 40) has a bearing surface (31 , 41) on which a bearing means (51) of the base element (60) can be placed in the receiving state (II).

6. Storage device (10) according to any one of the preceding claims ,
**characterized in that**
the first and second opening elements (30 , 40) have latching means (33 , 43) by means of which the first and second opening elements (30 , 40) can be fixed to one another in the receiving state (II).

7. Storage device (10) according to any one of the preceding claims ,
**characterized in that**
for transferring the receiving unit (20) from the receiving state (II) to the rest state (I) , the receiving unit (20) can be actuated in a first direction (101) by a force acting on the receiving unit (20) in such a way that a relative movement of the first and second opening elements (30 , 40) takes place at least partially in a second direction (102) , in particular the receiving region (20.1) being reduced in size in the second direction (102) during the relative movement of the first and second opening elements (30 , 40).

8. Storage device (10) according to any one of the preceding claims ,
**characterized in that**
at least one of the opening elements (30 , 40) and/or the base element (50) has a guiding means (32 , 42 , 52) by which the opening element (30 , 40) and/or the base element (50) can be guided on a counterguide means (11.1) of the housing element (11) when the receiving unit (20) is transferred from the receiving state (II) to the rest state (I).

9. Storage device (10) according to any one of the preceding claims ,
**characterized in that**
the guiding means (32 , 42 , 52) comprises an outer surface (32.1 , 42.1) of the opening element (30 , 40) and/or of the base element (50) , which is formed obliquely , in particular with respect to the first direction (101).

10. Storage device (10) according to any one of the preceding claims ,
**characterized in that**
the first opening element (30) , the second opening element (40) and/or the base element (50) are each formed in one piece as a plastic injection-molded part.

11. Storage device (10) according to any one of the preceding claims ,
**characterized in that**
a drive unit (80) is provided , by means of which the receiving unit (20) can be brought from the rest state (I) into the receiving state (II) , and/or **in that** a release mechanism (81) is provided , by means of which the receiving unit (20) can be brought from the rest state (I) into the receiving state (II) via a compressive force , in particular on a front side (22) of the receiving unit (20).

12. Storage device (10) according to any one of the preceding claims ,
**characterized in that**
when the receiving unit (20) is transferred from the rest state (I) to the receiving state (II) , only the guide element (60) , the first and second opening elements (30 , 40) , the base element (50) and the prestressing element (70) execute a movement, and/or **in that** the receiving unit (20) comprises the guide element (60) , the first and second opening elements (30 , 40) , the base element (50) and the prestressing element (70).

13. Means of transport (1) comprising
an interior space (2) accessible to a user,
wherein the interior space (2) comprises an equipment element (3) comprising a storage device (10) according to one of the preceding claims.

14. A method of operating a storage device (10) according to any one of the claims 1 to 12 for receiving a loose object (4) by the storage device (10) , comprising the steps of :
- Moving a first and a second opening element (30 , 40) of a receiving unit (20) of the storage device (10) relative to each other , so that the receiving unit (20) is transferred from a rest state (I) , in which the receiving of the loose object (4) in a receiving region (21) of the receiving unit (20) is prevented , to a receiving state (II) , in which the receiving of the loose object (4) in the receiving region (21) is enabled.

## Revendications

1. Dispositif de rangement (10) destiné à recevoir au moins un objet en vrac (4), en particulier pour un moyen de transport (1), comprenant
une unité de réception (20) qui peut être amenée au moins dans un état de repos (I) et dans un état d'attente (II), la réception de l'objet en vrac (4) dans une zone de réception (21) de l'unité de réception (20) étant empêchée dans l'état de repos (I) et étant possible dans l'état d'attente (II) ,
dans lequel l'unité de réception (20) présentant au moins un premier et un deuxième élément d'ouverture (30 , 40) qui , lors du passage de l'unité de réception (20) de l'état de repos (I) à l'état d'attente (II) , peuvent être déplacés l'un par rapport à l'autre de telle sorte que la zone de réception (21) est agrandie , les éléments d'ouverture (30 , 40) pouvant pivoter l'un par rapport à l'autre ,
**caractérisé en ce que**
l'unité de réception (20) présente un élément de précontrainte (70) sous la forme d'un ressort de pression, par lequel les éléments d'ouverture (30, 40) sont précontraints dans l'état d'attente (II).

2. Dispositif de rangement (10) selon la revendication 1,
**caractérisé en ce que**
qu'un élément de boîtier (11) est prévu et que l'unité de réception (20) est disposée, à l'état de repos (I) , au moins partiellement à l'intérieur de l'élément de boîtier (11) , en particulier la zone de réception (21) se trouvant , à l'état de repos (I) , entièrement à l'intérieur de l'élément de boîtier (11).

3. Dispositif de rangement (10) selon la revendication 1 ou 2,
**caractérisé en ce que**
l'unité de réception (20) présente, entre le premier et le deuxième élément d'ouverture (30 , 40) , un élément de fond (50) sur lequel l'objet en vrac (4) peut être déposé , en particulier au moins l'un des éléments d'ouverture (30 , 40) étant mobile par rapport à l'élément de fond (50).

4. Dispositif de rangement (10) selon l'une des revendications précédentes,
**caractérisé en ce que**
l'unité de réception (20) présente un élément de guidage (60) pour le guidage, en particulier au milieu, de l'élément de fond (50) entre le premier et le deuxième élément d'ouverture (30, 40),
et/ou **en ce que** l'élément de fond (50) peut être abaissé pour faire passer l'unité de réception (20) de l'état de repos (I) à l'état d'attente (II), en particulier l'élément de guidage (60) présentant un moyen de guidage (61) dans lequel l'élément de fond (50) est logé de manière mobile.

5. Dispositif de rangement (10) selon l'une des revendications précédentes,
**caractérisé en ce qu'**
au moins l'un des éléments d'ouverture (30, 40) présente une surface d'appui (31, 41) sur laquelle un moyen d'appui (51) de l'élément de fond (50) peut être posé à l'état d'attente (II).

6. Dispositif de rangement (10) selon l'une des revendications précédentes,
**caractérisé en ce que**
le premier et le deuxième élément d'ouverture (30, 40) présentent des moyens d'encliquetage (33, 43) par lesquels le premier et le deuxième élément d'ouverture (30, 40) peuvent être fixés l'un par rapport à l'autre dans l'état d'attente (II).

7. Dispositif de rangement (10) selon l'une des revendications précédentes,
**caractérisé en ce que**
l'unité de réception (20) peut être actionnée par une force agissant sur l'unité de réception (20) dans une première direction (101) pour faire passer l'unité de réception (20) de l'état d'attente (II) à l'état de repos (I) de telle sorte qu'un mouvement relatif du premier et du deuxième élément d'ouverture (30 , 40) s'effectue au moins partiellement dans une deuxième direction (102) , la zone de réception (20.1) se réduisant notamment dans la deuxième direction (102) lors du mouvement relatif du premier et du deuxième élément d'ouverture (30 , 40).

8. Dispositif de rangement (10) selon l'une des revendications précédentes,
**caractérisé en ce qu'**
au moins l'un des éléments d'ouverture (30 , 40) et/ou l'élément de fond (50) présente un moyen de guidage (32 , 42 , 52) par lequel l'élément d'ouverture (30 , 40) et/ou l'élément de fond (50) peut être guidé lors du passage de l'unité de réception (20) de l'état d'attente (II) à l'état de repos (I) sur un moyen de contre guidage (11.1) de l'élément de boîtier (11).

9. Dispositif de rangement (10) selon l'une des revendications précédentes,
**caractérisé en ce que**
le moyen de guidage (32, 42, 52) comprend une surface extérieure (32.1, 42.1) de l'élément d'ouverture (30, 40) et/ou de l'élément de fond (50), qui est réalisée de manière inclinée, en particulier par rapport à la première direction (101).

10. Dispositif de rangement (10) selon l'une des revendications précédentes,
**caractérisé en ce que**
le premier élément d'ouverture (30), le deuxième élément d'ouverture (40) et/ou l'élément de fond (50) sont réalisés chacun d'une seule pièce sous forme de pièce moulée par injection de matière plastique.

11. Dispositif de rangement (10) selon l'une des revendications précédentes,
**caractérisé en ce qu'**
il est prévu une unité d'entraînement (80) par laquelle l'unité de réception (20) peut être amenée de l'état de repos (I) à l'état d'attente (II) et/ou **en ce qu'**il est prévu un mécanisme de libération (81) par lequel l'unité de réception (20) peut être amenée de l'état de repos (I) à l'état d'attente (II) par une force de pression, en particulier sur une face avant (22) de l'unité de réception (20).

12. Dispositif de rangement (10) selon l'une des revendications précédentes,
**caractérisé en ce que**
lors du passage de l'unité de réception (20) de l'état de repos (I) à l'état d'attente (II), seuls l'élément de guidage (60), le premier et le deuxième élément d'ouverture (30 , 40), l'élément de fond (50) et l'élément de précontrainte (70) exécutent un mouvement, et/ou en ce que l'unité de réception (20) se compose de l'élément de guidage (60), du premier et du deuxième élément d'ouverture (30, 40), de l'élément de fond (50) et de l'élément de précontrainte (70).

13. Moyen de transport (1) comprenant
un espace intérieur (2) accessible à un utilisateur,
l'espace intérieur (2) présentant un élément d'équipement (3) dans lequel est intégré un dispositif de rangement (10) selon l'une des revendications précédentes.

14. Procédé d'exploitation d'un dispositif de rangement (10) selon l'une des revendications 1 à 12 destiné à recevoir d'un objet (4) en vrac par le dispositif de rangement (10), comprenant les étapes suivantes :
- Le déplacement d'un premier et d'un deuxième élément d'ouverture (30 , 40) d'une unité de réception (20) du dispositif de rangement (10) l'un par rapport à l'autre , de sorte que l'unité de réception (20) est transférée d'un état de repos (I), dans lequel la réception de l'objet en vrac (4) dans une zone de réception (21) de l'unité de réception (20) est empêchée , à un état d'attente (II) , dans lequel la réception de l'objet en vrac (4) dans la zone de réception (21) est possible.
